# EUROPÄISCHE PATENTANMELDUNG

(11) **EP 1 052 755 A2**
(43) Veröffentlichungstag der Anmeldung: **15.11.2000**
(21) Anmeldenummer: 00109951.4
(22) Anmeldetag: 11.05.2000
(51) Int. Cl.: H02G 3/22

(54) **Kabeldurchführung**

(30) Priorität: 11.05.1999 DE 19921564
(71) Anmelder: Voith Turbo GmbH & Co. KG, 89522 Heidenheim (DE)
(72) Erfinder: Martin, Heinz, 89518 Heidenheim (DE)
(74) Vertreter: Koch, Annegret Christa

(57) **Zusammenfassung**

Die Erfindung betrifft ein Verfahren zur Realisierung einer dichten Durchführung eines, wenigstens eine Einzelader (7) umfassenden Kabelelementes durch ein Wandelement (2).

Die Erfindung ist gekennzeichnet durch die folgenden Merkmale:
bei welchem die oder jede Einzelader im Bereich ihrer axialen Erstreckung durch die Durchgangsöffnung zur Bildung eines von einer Isolationsschicht freien Bereiches der Einzelader (7) abisoliert wird und
wenigstens ein Teilbereich des von einer Isolationsschicht freien Bereiches der jeweiligen Einzelader in der Durchgangsöffnung (14) des Wandelementes (2) mit Vergußmasse derart vergossen wird, daß das sich nach Aushärtung der Vergußmasse bildende Bauelement den Teilbereich des abisolierten Bereiches (19,13) gegenüber der Innenwandung (9) der Durchgangsöffnung (4) abdichtet.

## Beschreibung

Die Erfindung betrifft ein Verfahren zur Realisierung einer gegenüber Flüssigkeiten und/oder Gasen dichten Wanddurchführung von Kabelelementen; ferner eine Kabeldurchführung zur Durchführung eines, wenigstens eine Einzelader aufweisenden Kabelelementes durch ein Wandelement zur Realisierung eines dichten Überganges, insbesondere eines Überganges zwischen durch Wände getrennte Räume.

Allgemein sind eine Vielzahl von elektrischen Steckverbindungen bekannt, mittels welchen beispielsweise der Übergang zwischen einem Getriebe und einem Fahrzeug bewerkstelligt werden kann. Insbesondere eine immer größere Anzahl von Aktoren und Sensoren im Getriebe erfordert eine immer größere Anzahl von Steckkontakten. Bedingt durch die in der Regel vorgesehene räumliche Begrenzung aufgrund des gering zur Verfügung stehenden Bauraumes wird der Abstand zwischen den einzelnen Polen der Steckkontakte immer geringer. Das Auftreten von Kriechströmen und damit die Verfälschung von Messergebnissen werden daduch unterstützt. Beim Einstecken eines Steckers kann es des weiteren aufgrund fehlender visueller Kontrolle zu einem schrägen Aufsetzen und damit in Folge zu einem Verbiegen der Kontakte kommen. Ein weiteres wesentliches Problem besteht darin, daß es sich bei einem Getriebe um einen mindestens teilweise mit Rückständen von Schmiermitteln befüllten Raum handelt, aus welchem Kabelelemente nach außerhalb des Getriebes geführt werden. Um die erforderliche Dichtheit zu erreichen, werden deshalb die verwendeten Steckdosen teilweise aufwendig nachgearbeitet, indem die entstehenden Zwischenräume z.B. mit Epoxydharz ausgegossen werden. Auch bedingen hohe Anforderungen an die Größe der Einbauräume und spezielle Kundenanforderungen eine Vielzahl von unterschiedlichsten Steckervarianten und somit letztendlich auch Getriebevarianten. Ein weiterer wesentlicher Nachteil besteht darin, daß die während des Betriebes auftretenden hohen Getriebetemperaturen im Steckerbereich zu einer Beschädigung der fahrzeugseitigen Isolierung führen können. Um dies zu vermeiden muß der fahrzeugseitige Kabelbaum, d.h. der außerhalb des Getriebeinnenraumes befindliche Kabelbaum mit einer hochtemperaturfesten Isolierung versehen werden. Da die Kabel in der Regel erhebliche Längen aufweisen, ist diese Forderung immer mit einem enormen Kostenaufwand verbunden.

Des weiteren sind Vorrichtungen zur Kabeldurchführung zur Realisierung eines Überganges von Kabeln von einem mit Schmiermitteln oder ähnlichen wenigsten teilweise befüllten oder Rückstände enthaltenden und durch ein Gehäuse wenigsten teilweise umschlossenen Raumbereich in einen Bereich außerhalb dieses Raumes bekannt, welche ein eine Durchgangsöffnung aufweisendes Übergangselement mit einem in diesem angeordneten Isolierkörper aus elektrisch nicht leitfähigem Material zur Durchführung der einzelnen Kabelelemente eines Kabels verwenden. Jedes Kabelelement ist dabei im Bereich des Isolierkörpers geteilt ausgeführt und die durch die Teilung des Kabelelementes in wenigstens zwei Teilelemente erzeugten Endbereiche sind im Isolierkörper über eine crimpfähige Kupplung miteinander gekoppelt. Diese Lösung ist jedoch sehr aufwendig und teuer. Durch die Anwendung der Crimptechnik werden bei der Herstellung hohe Anforderungen an die Prozeßabsicherung gestellt.

Der Erfindung liegt daher die Aufgabe zugrunde, eine Möglichkeit der Durchführung von Kabelelementen durch ein Wandelement, insbesondere eine Kabelduchführung zur Realisierung des Überganges zwischen zwei Räumen zu entwickeln, welche die obengenannten Nachteile vermeidet. Im Vordergrund steht dabei die Beschaffung einer im Hinblick auf Kosten und Aufwand günstigen Alternative mit hoher Funktions- bzw. Betriebssicherheit.

Das dabei ursprünglich verwendete Steckelement muß dabei keine Abdichtfunktion aufweisen.

Die erfindungsgemäße Lösung ist durch die Merkmale der Ansprüche 1 und 8 charakterisiert. Vorteilhafte Ausgestaltungen sind jeweils in den Unteransprüchen beschrieben.

Im Verfahren zur Realisierung einer dichten Durchführung eines, wenigstens eine Einzelader aufweisenden Kabelelementes durch ein Wandelement, werden erfindungsgemäß die Einzeladern des Kabelelementes im Bereich ihrer axialen Erstreckung durch die Durchgangsöffnung des Wandelementes zur Bildung eines von einer Isolationsschicht freien Bereiches der Einzelader ohne Unterbrechung der Einzelader abisoliert. Der von einer Isolationsschicht freie Bereich der Einzelader in der Durchgangsöffnung des Wandelementes wird dann mit Vergußmasse derart vergossen, daß das sich nach Aushärtung der Vergußmasse bildende Bauelement wenigstens einen Teilbereich des von einer Isolationsschicht freien Bereiches, d. h. des abisolierten Bereiches, gegenüber der Innenwandung der Durchgangsöffnung des Wandelements abdichtet.

Unter Wandelement wird dabei das die Durchgangsöffnung zwischen zwei Raumen bildende Bauelement verstanden. Dabei kann es sich direkt um eine Gehäusewand oder aber um ein, in die Durchgangsöffnung des Gehäuses einbringbares weiteres Element mit einer Durchgangsöffnung zur Führung der Einzeladern handeln.

In einer besonderen bevorzugten Ausführung erfolgt der Vergußvorgang derart, daß das sich nach Aushärtung der Vergußmasse bildende Bauelement den abisolierten Bereich gegenüber der Innenwandung der Durchgangsöffnung und gegebenenfalls den sich an den von einer Isolationsschicht freien Bereich anschließenden Isolationsschichten abdichtet.
Die Abdichtfunktion ist dabei allein gewährleistet beim Verguß der Durchgangsöffnung des Wandelementes und der von Isolationsschicht freien Bereiche der Einzeladern.

Vorzugsweise erfolgt die Abdichtung gegenüber wenigstens einem, vorzugsweise den beiden, sich an einen von Isolationsschichten freien Bereich anschließenden Bereichen mit Isolationsschichten. Die Vergußmasse gelangt dabei zwischen die, als elektrische Leiter fungierende Einzeldrähte der Einzelader und die diese umschließende Isolationsschicht. Die Isolationsschichten können in diesem Fall zur Führung und Zugentlastung der Einzeladern vorteilhaft sein.

Die Vergußmasse kann des weiteren auch in die bestehenden Räume der Einzeladern zwischen die Einzeldrähte der Leiter eindringen und eine Verbindung mit diesen eingehen. Dazu kann eventuell ein begrenztes Aufdrehen der verseilten Einzeldrähte der Einzeladern erforderlich werden.

Die erfindungsgemäße Lösung erlaubt mit geringstem Aufwand, insbesondere hinsichtlich der durchzuführenden Verfahrensschritte, und ohne erforderliche Trennung der Einzelader im Durchführungsbereich durch das Wandelement die Realisierung einer dichten Kabeldurchführung. Durch den Verguß des von Isolationsschicht freien Bereiches werden von diesem aggressive Medien ferngehalten.

Unter einem weiteren Aspekt der Erfindung besteht die Möglichkeit wenigstens während des Vorganges des Vergiessens, die einzelnen Einzeladern hinsichtlich ihrer Lage zueinander und/oder gegenüber der Durchgangsöffnung des Wandelementes zu fixieren. Durch die Lagefixierung besteht die Möglichkeit, auch für flexible Kabelelemente eine allzeit dichte Kabeldurchführung durch ein Wandelement zu ermöglichen.

Bezüglich der Realisierung der Lagefixierung der Einzeladern eines Kabelelementes untereinander und/oder gegenüber der Durchgangsöffnung werden im wesentlichen zwei grundlegende Verfahren unterschieden. Diese unterscheiden sich hinsichtlich des verwendeten Lagefixierungsmittels, welches entweder Bestandteil der Kabeldurchführung bleibt oder aber nach Aushärtung der Vergußmasse entfernbar ist. Im erstgenannten Fall findet ein, in die Durchgangsöffnung des Wandelementes einbringbarer Abstandshalter aus einem elektrisch nicht leitfähigem Material Verwendung. Die Einzeladern in der Durchgangsöffnung des Wandelementes können durch Durchgangsöffnungen des Abstandshalters zur Festlegung der Lage der Einzeladern zueinander und gegenüber der Innenwandung der Durchgangsöffnung des Wandelementes derart geführt werden, daß ein Teilbereich des von Isolationsschichten freien Bereiches der Einzeladern sich über mindestens einen Teilbereich der zugehörigen Durchgangsöffnung im Abstandshalter und vorzugsweise auch darüber hinaus erstreckt. Beim Vergießen des von einer Isolationsschicht freien Bereiches der bzw. einer Einzelader in der Durchgangsöffnung des Wandelementes wird der Abstandshalter mit vergossen, so daß das sich nach Aushärtung der Vergußmasse bildende Bauelement mit dem Abstandshalter eine bauliche Einheit bildet, wobei das sich nach Aushärtung der Vergußmasse bildende Bauelement sich teilweise in die Durchgangsöffnung bzw. Durchgangsöffnungen des Abstandshalters erstrecken kann. Die Durchgangsöffnung im Abstandshalter kann vielgestaltig ausgeführt sein. Im einfachsten Fall weist diese einen gleichmäßigen Querschnitt über die Breite des Abstandshalters auf Denkbar ist jedoch auch die Ausführung mit sich änderndem Querschnitt. In diesem Fall ist wenigstens ein Teilbereich vorhanden, welcher hinsichtlich seiner Abmessungen an die Isolationsschicht des Kabelelementes angepaßt ist und wenigstens ein, sich in Richtung der Vergußmasse hinsichtlich seiner Abmessungen vorzugsweise erweiternder Teilbereich, in welchem der von Isolationsschicht freie Bereich vorzugsweise vollständig integriert sein kann und somit hinsichtlich seiner axialen Erstreckung vollständig im Bereich der axialen Erstreckung des Abstandshalters vergossen wird. Denkbar ist jedoch auch hier eine Erstreckung des von Isolationsschicht freien Bereiches über die axiale Erstreckung des Abstandshalters hinaus.

Unter einem weiteren vorteilhaften Aspekt der Erfindung wird der Abstandshalter derart vergossen, daß die Vergußmasse in das Innere der Isolierungen, welche an den, von einer Isolationsschicht freien Bereich, angrenzen, eindringt, und die Einzeldrähte innig umschließt. Dabei wird die Vergußdicke derart gewählt, daß die stehengebliebene Isolierung der Einzeladern im Abstandshalter zur Zugentlastung und Führung in ausreichender Länge ausreicht.

Eine andere Möglichkeit sieht vor, daß die Einzeladern vor und während des Vergiessens in der Durchgangsöffnung des Wandelementes hinsichtlich ihrer Lage zueinander und gegenüber der Durchgangsöffnung mittels einer Gießvorrichtung fixiert werden, welche nach Aushärtung der Vergußmasse aus der Durchgangsöffnung des Wandelementes entfernt wird.

Bei einer erfindungsgemäß gestalteten, gegenüber Gas- und/oder Flüssigkeit dichten Kabeldurchführung zur Durchführung eines, wenigstens eine Einzelader aufweisenden Kabelelementes durch ein Wandelement, weist die Einzelader im Bereich der Durchgangsöffnung des Wandelementes einen von Isolationsschichten freien Bereich auf. Wenigstens ein Teilbereich des freien Bereiches der Einzelader ist in ein Bauelement aus elektrisch nichtleitfähiger Vergußmasse eingebettet, welches gas- und/oder flüssigkeitsdichtend an der Innenwandung der Durchgangsöffnung anliegt, vorzugsweise durch Stoffschluß zwischen dem Bauelement aus Vergußmasse und der Innenwandung der Durchgangsöffnung des Wandelementes. Unter einem Wandelement soll dabei jener Teilbereich eines Bauelementes, Gehäuses e.t.c. verstanden werden, durch welchen eine Durchführung wenigstens eines elektrischen Kabelelementes erfolgen soll. Dieses kann Gehäusebestandteil sein oder aber ein separates Bauelement, welches in eine Öffnung z. B. im Gehäuse einbringbar ist. Vorzugsweise ist der gesamte, von Isolationsschichten freie Bereich der Einzelader in ein Bauelement des elektrisch nicht leitfähiger Vorgußmasse eingebettet, welches Gas- und/oder flüssigkeitsdichten an der Innenwandung der Durchgangsöffnung und der, an den von Isolationsschichten freien Bereich der Einzelader angrenzenden Isolationsschicht der Einzelader anliegt.

Unter einem weiteren Aspekt der Erfindung ist nicht nur der von Isolationsschichten freie Bereich der Einzelader in ein Bauelement aus elektrisch nichtleitfähiger Vergußmasse eingebettet, welches die Einzeldrähte in den von Isolationsschichten freien Bereichen gas- und/oder flüssigkeitsdicht gegenüber der Innenwandung der Durchgangsöffnung wenigstens mittelbar und der, an den von Isolationsschichten freien Bereich der Einzelader angrenzenden Isolationsschicht der Einzelader abdichtet, sondern auch jeweils ein Teilbereich dieser angrenzenden Isolationsschichten. Die Einbettung der Isolationsschichten in Vergußmasse erfolgt dabei derart, daß die Vergußmasse auch zwischen Einzeldraht und Isolationsschicht eindringen kann.

Da die erfindungsgemäße Durchführung auch für flexible Kabelelemente geeignet sein muß, sind unter einem weiteren Aspekt der Erfindung Mittel zur Lagefixierung der Einzelader bzw. Einzeladern eines Kabelelementes untereinander und/oder gegenüber der Durchgangsöffnung im Wandelement vorgesehen. Als Mittel zur Lagefixierung fungieren dabei separat dafür vorzusehende Einrichtungen, beispielsweise in Form eines Abstandshalters, welcher in der Durchgangsöffnung des Wandelementes angeordnet und mit dem zweiten Bauelement aus Vergußmasse vergossen ist. Dieser besteht aus einem elektrisch nicht leitfähigem Material und weist wenigstens eine Durchgangsöffnung für eine Einzelader, vorzugseise jedoch Durchgangsöffnungen für eine Mehrzahl von Einzeladern auf. Der von Isolationsschichten freie Bereich der Einzelader kann sich sich über einen Teilbereich der Durchgangsöffnungen des Abstandshalters erstrecken. Er erstreckt sich immer über eine bestimmte Länge über diesen hinaus, wobei die Größe der Erstreckung die Mindestdicke des Bauelementes aus elektrisch nichtleitfähiger Vergußmasse bestimmt.

Für die Ausgestaltung der Durchgangsöffnung im Wandelement bestehen eine Vielzahl von Möglichkeiten. Vorzusweise werden Ausführungen mit kreisrundem Querschnitt gewählt. Dies bietet den Vorteil der Unabhängigkeit der Montagelage gegenüber der Einbaulage, da der Abstandshalter hinsichtlich seiner Geometrie an die Geometrie der Durchgangsbohrung anzupassen ist.

Die Durchgangsöffnungen im Abstandshalter sind vorzugsweise ebenfalls im Querschnitt betrachtet kreisrund ausgeführt, und entsprechen hinsichtlich ihrer Abmessungen wenigstens denen der Einzelader mit Isolationsschicht.

Als Vergußmasse findet ein Kunststoff, vorzugsweise Kunstharz Verwendung.

Die ausreichende Fixierung der Einzeladern im Abstandshalter und des Abstandshalters in der Durchgangsöffnung ist von einer Mehrzahl von Faktoren abhängig. Zu diesen gehören:
- die Art des Kunststoffes zw. der Vergußmasse,
- der Werkstoff des Abstandshalters
- der Werkstoff der Durchgangsöffnung

Diese finden bei der Auslegung immer derart Berücksichtigung, daß eine, für den Einatzfall ausreichende Fixierung des Abstandshalters und/oder der Einzeladern im Abstandshalter gewährleistet ist.

Die erfindungsgemäße Lösung ist für jeden Anwendungsfall einer erforderlichen dichten Kabeldurchführung geeignet. Es besteht keine Beschränkung hinsichtlich des Einsatzfalles.

Die erfindungsgemäße Lösung ist nachfolgend anhand von Figuren erläutert.

Dabei ist im einzelnen folgendes dargestellt:
- Fig. 1a und 1b: verdeutlichen jeweils eine bevorzugte Ausführung einer erfindungsgemäß gestalteten Kabeldurchführung;
- Fig. 2: verdeutlicht eine Ausführung einer erfindungsgemäß gestalteten Kabeldurchführung ohne Verwendung eines speziellen Abstandshalters;
- Fig. 3: zeigt eine stark vereinfachte dichte Kabeldurchführung;

Die Figur 1a verdeutlicht anhand einer Schnittdarstellung eine vorteilhafte Kabeldurchführung 1 durch ein Wandelement 2, welches ein separates Teil oder beispielsweise Bestandteil eines Gehäuses 3 sein kann, für ein Kabelelement 6, umfassend wenigstens eine Einzelader 7. Die Kabeldurchführung 1 umfaßt einen, in einer Durchgangsöffnung 4 im Wandelement angeordneten Abstandshalter 5. Der Abstandshalter 5 ist dabei wenigstens teilweise, vorzugsweise jedoch bezogen auf seine Breite b, d.h. seine Erstreckung in Richtung der Länge I der Durchgangsöffnung 4 vollständig in der Durchgangsöffnung 4 integriert. Die Geometrie des Abstandshalters 5 ist dabei der Geometrie der Durchgangsöffnung 5 angepaßt, weist jedoch am Umfang 8 Außenabmessungen auf, welche den Abmessungen der Durchgangsöffnung 4 angepaßt sind. Vorzugsweise weisen der Abstandshalter 5 und die Durchgangsöffnung dabei einen kreisrunden Querschnitt auf.

Der Abstandshalter 5 weist Durchgangsöffnungen, hier stellvertretend nur eine Durchgangsöffnung 10, zur Durchführung der Einzeladern, hier der Einzelader 7 auf. Vorzugsweise sind die Durchgangsöffnungen 10 hinsichtlich ihres Qerschnittes dem Querschnitt der Einzeladern 7 angepaßt. Bezüglich der Abmessungen sind die Durchgangsöffnungen 10 derart ausgelegt, daß die Einzeladern 7 in diese ohne Probleme eingeführt werden können. Die Einzeladern 7 bestehen aus wenigstens einer Isolationsschicht 11, welche die einzelnen Leitungselemente 12 in Form von Drähten umschließen. Die Einzeladern 7 weisen im Bereich der Durchführung durch die Durchgangsöffnungen 10 des Abstandshalters 5 wenigstens jeweils einen abisolierten Bereich 13 auf, ohne daß eine Trennung bzw. Unterbrechung der Leitungselemente 12 vorgenommen wird. Diese abisolierten Bereiche 13 können sich in Durchführungsrichtung des Kabelelementes 6 durch das Wandelement 2 betrachtet über einen Teilbereich 14 des Abstandshalters 5 erstrecken und auf jeden Fall über diesen um eine bestimmte Länge E hinaus. Diese Länge E bestimmt dabei die Mindesterstreckung eines, dem Abstandshalter 5 zugeordneten weiteren zweiten Bauelementes 17, welches aus Vergußmasse gebildet ist. In dieses Bauelement ist der abisolierte Bereich 13 der Einzelader 7 eingebettet und gegenüber der Innenwandung 9 der Durchgangsöffnung 4 und gegebenenfalls den sich an die, sich an die von einer Isolationsschicht freien Bereiche anschließenden Isolationsschichten 15 und 16 abdichtet.

Zur Realisierung der Kabeldurchführung durch ein Wandelement 2 werden die Einzeladern 7 nicht getrennt, weder im Bereich der Durchführung noch davor oder dahinter in Einbaulage betrachtet. Die Einzeladern werden lediglich im Bereich ihrer axialen Erstreckung durch die Durchgangsöffnung 4 zur Bildung eines von einer Isolationsschicht freien Bereiches 13 der Einzelader 7 abisoliert. Die Einzeladern 7 werden dann in der Durchgangsöffnung 4 des Wandelementes 2 durch die Durchgangsöffnungen 10 des Abstandshalters 5 zur Festlegung der Lage der Einzeladern zueinander und gegenüber der Innenwandung 9 der Durchgangsöffnung 4 des Wandelementes 2 derart geführt, daß ein Bereich des von Isolationsschichten freien Bereiches 13 der Einzeladern 7 sich über die zugehörige Durchgangsöffnung 10 im Abstandshalter 5 hinaus erstreckt. Der Abstandshalter 5 wird beim Vergießen des von einer Isolationsschicht freien Bereiches 13 der Einzelader 7 in der Durchgangsöffnung 4 des Wandelementes 2 mit vergossen, so daß das sich nach Aushärtung der Vergußmasse bildende Bauelement 17 mit dem Abstandshalter 5 eine bauliche Einheit 18 bildet, wobei das sich nach Aushärtung der Vergußmasse bildende Bauelement 17 sich teilweise in die Durchgangsöffnung 10 des Abstandshalters 5 hineinerstrecken kann.

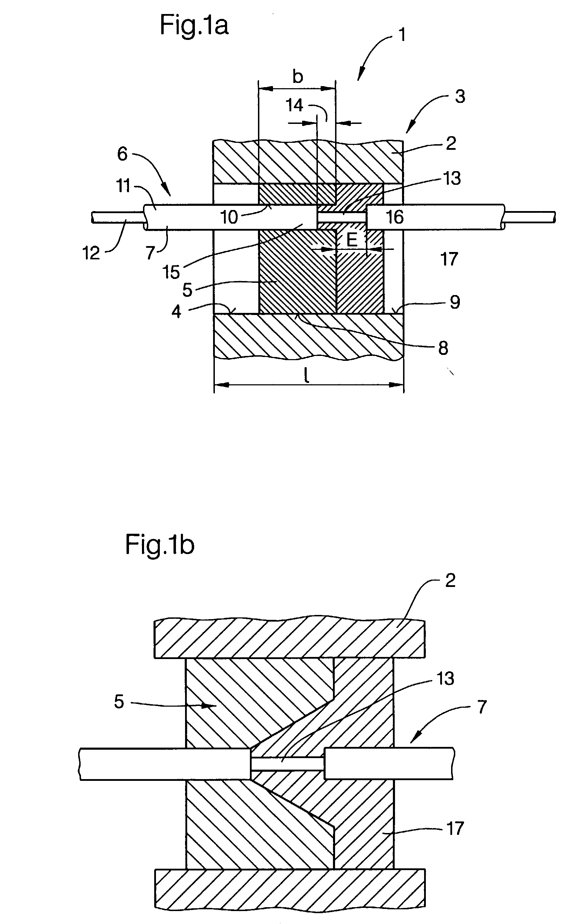

Die Figur 1b verdeutlicht eine weitere Ausführung einer erfindungsgemäßen Kabeldurchführung 1 durch ein Wandelement 2, bei welchem der von Isolationsschichten freie Bereich 13 der Einzeladern 7 bereits im Abstandshalter 5 vergossen wird. Dazu weist der Abstandshalter 5 eine Durchgangsöffnung 10 mit sich änderndem Querschnitt, insbesondere sich hinichtlich des Raumes, in welchen das Kabelelement 6 überführt werden soll, mit sich erweiterendem Querschnitt auf. Der von Isolationsschicht freie Bereich 13 ist dabei vollständig in die Durchgangsöffnung 10 integriert.

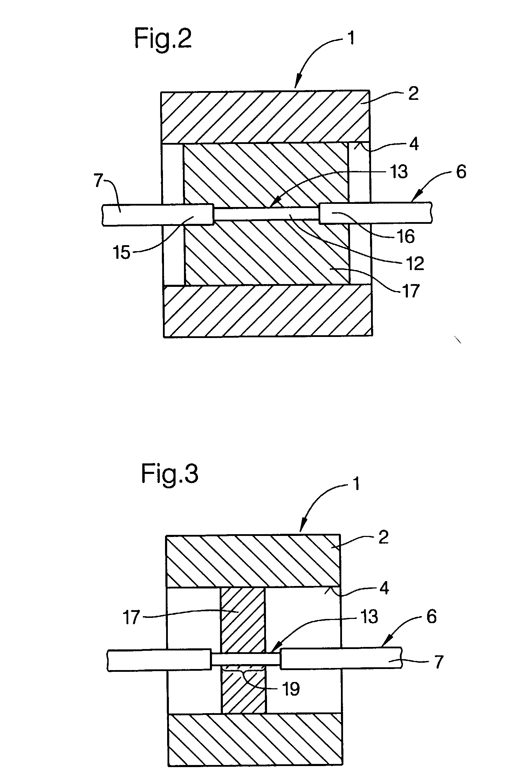

Die Figur 2 verdeutlicht eine weitere Ausführung einer erfindungsgemäß gestalteten Kabeldurchführung 1 durch ein Wandelement 2. Bei diesem wurde gegenüber der in der Figur 1 dargestellten Kabeldurchführung auf die Verwendung eines Abstandshalters 5 verzichtet und die Funktion des Abstandshalters der Vergießvorrichtung zugewiesen. Daß sich nach Aushärtung der Vergußmasse bildende Bauelement 17 umschließt dabei den abisolierten Teilbereich 13 des Kabelelementes 6, insbesondere der Einzelader 7 innig und zusätzlich die an den von Isolationsschichten freien Bereich 13 anschließenden Bereiche mit Isolationsschicht 15 bzw. 16 wenigstens teilweise. Auch hier werden die Einzeladern 7 nicht getrennt, sondern lediglich im Bereich ihrer axialen Erstreckung durch die Durchgangsöffnung 4 zur Bildung eines von einer Isolationsschicht freien Bereiches 13 der Einzelader 7 abisoliert. Die Einzeladern 7 werden dann in die Durchgangsöffnung 4 des Wandelementes 2 durch entsprechende Einrichtungen an der Vergießvorrichtung zur Festlegung der Lage der Einzeladern zueinander und gegenüber der Innenwandung 9 der Durchgangsöffnung 4 des Wandelementes derart geführt, daß die Vergußmasse nach Aushärtung den gesamten von Isolationsschichten freien Bereich 13 und den an die von Isolationsschicht freien Bereiche anschließenden Isolationsschichten 15 und 16 wenigstens geringfügig in axialer Richtung betrachtet umschließt. Diese Ausführung ist vor allem für die Realisierung dichter Kabeldurchführungen mit einer geringen Anzahl von Einzeldrähten geeignet.

Die Figur 3 verdeutlicht die Realisierung einer besonders einfachen dichten Kabeldurchführung 1 durch ein Wandelement 2. Diese wird verfahrensmäßig in Analogie zu dem in Figur 2 beschriebenen realisiert, wobei jedoch das nach Aushärtung der Vergußmasse sich bildende Bauelement lediglich nur einen Teilbereich 19 des von Isolationsschicht freien Bereiches des Kabelelementes 6, insbesondere der Einzelader 7 innig umschließt. Beidseitig in axialer Richtung der Durchführungsöffnung 4 durch das Wandelement 2 betrachtet erstreckt sich der von Isolationsschichten freie Bereich 13 nur sehr geringfügig über das nach Aushärtung der Vergußmasse entstehende Bauelement 17 hinaus. Diese Ausführung ist besonders für die Einsatzfälle geeignet, in welchen ein Aussetzen der von Isolationsschicht freien Bereiche 13 der Einzeladern 7 gegenüber Flüssigkeiten nicht zu befürchten ist.

### Bezugszeichenhiste:

- 1: Kabeldurchführung
- 2: Wandelement
- 3: Gehäuse
- 4: Durchgangsöffnung im Wandelement
- 5: Abstandshalter
- 6: Kabelelement
- 7: Einzelader
- 8: Außenumfang
- 9: Innenumfang
- 10: Durchgangsöffnung
- 11: Isolationsschicht
- 12: Leitungselement
- 13: abisolierter Bereich
- 14: Teilbereich
- 15: Isolationsschicht
- 16: Isolationsschicht
- 17: zweites Bauelement
- 18: bauliche Einheit
- 19: Teilbereich des abisolierten Bereiches

## Patentansprüche

1. Verfahren zur Realisierung einer dichten Durchführung eines, wenigstens eine Einzelader umfassenden Kabelelementes durch ein Wandelement, gekennzeichnet durch die folgenden Merkmale:
1.1 bei welchem die oder jede Einzelader (7) im Bereich ihrer axialen Erstreckung durch die Durchgangsöffnung (14) zur Bildung eines von einer Isolationsschicht freien Bereiches der Einzelader abisoliert wird und
1.2 wenigstens ein Teilbereich (19, 13) des von einer Isolationsschicht freien Bereiches der jeweiligen Einzelader in der Durchgangsöffnung des Wandelementes (2) mit Vergußmasse derart vergossen wird, daß das sich nach Aushärtung der Vergußmasse bildende Bauelement den Teilbereich des abisolierten Bereiches (19, 13) gegenüber der Innenwandung (9) der Durchgangsöffnung (4) abdichtet.

2. Verfahren nach Anspruch 1, dadurch gekennzeichnet, daß der gesamte, von einer Isolationsschicht freie Bereich (13) der jeweiligen Einzelader (7) in der Durchgangsöffnung (4) des Wandelementes (2) mit Vergußmasse derart vergossen wird, daß das sich nach Aushärtung der Vergußmasse bildende Bauelement (17) den abisolierten Bereich (13) gegenüber der Innenwandung (9) der Durchgangsöffnung (4) und der sich an den von einer Isolationsschicht freien Bereich anschließenden Isolationsschicht abdichtet.

3. Verfahren nach Anspruch 2, dadurch gekennzeichnet, daß der von einer Isolationsschicht freie Bereich (13) der Einzelader (7) in der Durchgangsöffnung (4) des Wandelementes (2) mit Vergußmasse derart vergossen wird, daß das sich nach Aushärtung der Vergußmasse bildende Bauelement den abisolierten Bereich (13) gegenüber der sich beidseitig an den von einer Isolationsschicht freien Bereich anschließenden Isolationsschicht (15, 16) abdichtet, wobei die Vergußmasse auch zwischen Isolationsschicht (15, 16) und Einzeldraht bzw. Leitungselement (12) der Einzelader (7) eingebracht wird.

4. Verfahren nach einem der Ansprüche 1 bis 3, dadurch gekennzeichnet, daß wenigstens während des Vorganges des Vergiessens die einzelnen Einzeladern (7) hinsichtlich ihrer Lage zueinander und/oder gegenüber der Durchgangsöffnung (4) des Wandelementes (2) fixiert werden.

5. Verfahren nach Anspruch 4, gekennzeichnet durch das folgende Merkmal:
5.1 die Einzeladern (7) werden in der Durchgangsöffnung (4) des Wandelementes (2) durch Durchgangsöffnungen (10) eines Abstandshalters (5) zur Festlegung der Lage der Einzeladern (7) zueinander und gegenüber der Innenwandung (9) der Durchgangsöffnung (4) des Wandelementes (2) derart geführt, daß sich mindestens ein Teilbereich des von Isolationsschichten freien Bereiches der Einzeladern (7) vergießen läßt.

6. Verfahren nach Anspruch 5, gekennzeichnet durch die folgenden Merkmale:
6.1 die Einzeladern (7) werden in der Durchgangsöffnung (4) des Wandelementes (2) durch Durchgangsöffnungen (10) eines Abstandshalters (5) zur Festlegung der Lage der Einzeladern (7) zueinander und gegenüber der Innenwandung (9) der Durchgangsöffnung (4) des Wandelementes (2) derart geführt, daß sich ein Teilbereich des von Isolationsschichten freien Bereiches der Einzeladern (7) über die Durchgangsöffnung (10) im Abstandshalter (5) hinaus erstreckt;
6.2 der Abstandshalter (5) wird beim Vergießen des von einer Isolationsschicht freien Bereiches (13) der Einzelader (7) in der Durchgangsöffnung (4) des Wandelementes (2) mit vergossen, so daß das sich nach Aushärtung der Vergußmasse bildende Bauelement (17) mit dem Abstandshalter (5) eine bauliche Einheit (18) bildet.

7. Verfahren nach Anspruch 5 oder 6, dadurch gekennzeichnet, daß ein Teilbereich (14) des von Isolationsschichten freien Bereiches der Einzeladern über einen Teilbereich (14) der zugehörigen Durchgangsöffnung (4) im Abstandshalter (5) erstreckt und das sich nach Aushärtung der Vergußmasse bildende Bauelement (17) sich teilweise in die Durchgangsöffnung des Abstandshalters (5) erstreckt.

8. Verfahren nach Anspruch 4, dadurch gekennzeichnet, daß die Einzeladern (7) vor und während des Vergießens in der Durchgangsöffnung (14) des Wandelementes (2) hinsichtlich ihrer Lage zueinander und gegenüber der Durchgangsöffnung, mittels einer Gießvorrichtung fixiert werden, welche nach Aushärtung der Vergußmasse aus der Durchgangsöffnung (4) des Wandelementes (2) entfernt wird.

9. Kabeldurchführung zur Durchführung eines, wenigstens eine Einzelader (7) aufweisenden Kabelelementes (6) durch ein Wandelement; gekennzeichnet durch die folgenden Merkmale:
9.1 die Einzelader (7), welche wenigstens einen Einzeldraht (12) und wenigstens eine, diesen umschließende Isolationsschicht (11) umfaßt, weist im Bereich der Durchgangsöffnung (4) des Wandelementes (2) einen von Isolationsschichten freien Bereich (13) auf;
9.2 der von Isolationsschichten freie Bereich (13) der Einzelader (7) ist wenigstens teilweise in ein Bauelement aus elektrisch nichtleitfähiger Vergußmasse (17) eingebettet, welches die Einzeldrähte (12) in diesem Bereich des von Isolationsschichten freien Bereiches (13) gas- und/oder flüssigkeitsdicht gegenüber der Innenwandung (9) der Durchgangsöffnung (4) abdichtet.

10. Kabeldurchführung nach Anspruch 9, gekennzeichnet durch die folgenden Merkmale:
10.1 der gesamte von Isolationsschichten freie Bereich (13) der Einzelader (7) ist in ein Bauelement aus elektrisch nicht leitfähiger Vergußmasse (17) eingebettet, welches die Einzeldrähte (12) in den von Isolationsschichten freien Bereichen (13) gas- und/oder flüssigkeitsdicht gegenüber der Innenwandung (9) der Durchgangsöffnung (4) wenigstens mittelbar und der an den von Isolationsschichten freien Bereich (13) der Einzelader (7) angrenzende Isolationsschichten (15, 16) der Einzelader (7) abdichtet.

11. Durchführung nach Anspruch 9, gekennzeichnet durch die folgenden Merkmale:
11.1 mit einem, in der Durchgangsöffnung angeordneten Abstandshalter (5) aus elektrisch nicht leitfähigem Material mit Durchgangsöffnungen (10) für die Einzeladern, welcher mit dem zweiten Bauelement (17) aus Vergußmasse vergossen ist;
11.2 der von Isolationsschichten freie Bereich (13) der Einzelader (7) kann sich über einen Teilbereich (14) der Durchgangsöffnungen (10) des Abstandshalters (5) erstrecken und über eine bestimmte Länge über diesen hinaus, wobei die Größe der Erstreckung die Mindestdicke des Bauelementes (17) aus elektrisch nichtleitfähiger Vergußmasse bestimmt.

12. Kabeldurchführung nach Anspruch 11, dadurch gekennzeichnet, daß die Geometrie der Durchgangsöffnungen (10) im Abstandshalter (5) den Außenabmessungen der Einzelader (7) mit vorhandener Isolationsschicht (11, 15, 16) angepaßt ist.

13. Kabeldurchführung nach einem der Ansprüche 9 bis 12, dadurch gekennzeichnet, daß das Kabelement flexibel ist.

14. Kabeldurchführung nach einem der Ansprüche 9 bis 13, dadurch gekennzeichnet, daß die Vergußmasse Kunstharz ist.
